# EUROPÄISCHE PATENTSCHRIFT

(11) **EP 4 234 299 B1**
(45) Veröffentlichungstag und Bekanntmachung des Hinweises auf die Patenterteilung: **11.03.2026**
(21) Anmeldenummer: 23169791.3
(22) Anmeldetag: 22.08.2019
(51) Int. Cl.: B60K 1/00, B60K 1/04

(54) **ENERGIEMODUL FÜR EIN NUTZFAHRZEUG**
ENERGY MODULE FOR COMMERCIAL VEHICLE
MODULE ÉNERGÉTIQUE POUR UN VÉHICULE UTILITAIRE

(30) Priorität: 30.08.2018 DE 102018121220
(43) Veröffentlichungstag der Anmeldung: 30.08.2023
(62) Teilanmeldung aus: 19193005.6
(73) Patentinhaber: MAN Truck & Bus SE, 80995 München (DE)
(72) Erfinder: Kondic, Darko, 80995 München (DE); Kusch, Willi, 88239 Wangen im Allgäu (DE); Treusch, Stephan, 80995 München (DE); Burger, Norbert, 80995 München (DE); Ludwig, Stefan, 80995 München (DE)
(74) Vertreter: v. Bezold & Partner Patentanwälte - PartG mbB

(56) Entgegenhaltungen:
- WO-A1-2017/076980
- DE-A1- 102011 109 024
- DE-A1- 102013 001 473
- US-A1- 2012 267 080
- US-A1- 2014 338 999
- US-A1- 2017 225 588

## Beschreibung

Die Erfindung betrifft ein Energiemodul für ein Nutzfahrzeug, vorzugsweise für einen Lastkraftwagen oder einen Omnibus.

Bei einer Fahrzeugmontage eines voll- oder teilelektrifizierten Nutzfahrzeugs ist der Verbau von Hochvolt-Komponenten aus Gründen der Arbeitssicherheit und den hohen Anforderungen an die Mitarbeiterqualifikation deutlich höher als bei konventionellen Fahrzeugen. Aus diesen Gründen sollten die energieführenden Komponenten möglichst spät an das Fahrzeug montiert werden, was zu Montagekonflikten führen kann. Die Energiekomponenten müssen mechanisch und elektrisch zusammengestellt und potentialfrei montiert werden. Eine unsachgerechte Montageausführung, speziell von Hochvolt-Komponenten, stellt im Praxiseinsatz ein enormes Sicherheitsrisiko sowohl im Herstellprozess, für den Fahrzeugbetreiber als auch für die im Straßenverkehr beteiligen Personen dar. Eine weitere Notwendigkeit stellt die passive Sicherheit der hochvoltführenden Komponenten im Crashfall dar.

Die DE 10 2017 004 162 A1 offenbart einen Elektro- oder Hybrid-Omnibus, der eine Bodenstruktur und eine Batteriemodulstruktur aufweist. Die Bodenstruktur ist zwischen einem Vorderachssegment und einem Hinterachssegment des Omnibusses angeordnet und mit dem Vorderachssegment und dem Hinterachssegment verbunden. Die Bodenstruktur ist eine tragende Struktur des Omnibusses. Die Batteriemodulstruktur weist eine Vielzahl von Batteriemodulen auf und ist reversibel lösbar von der Unterseite des Omnibusses an die Bodenstruktur fixierbar. Die Bodenstruktur weist eine Batteriekühlungseinheit zum Abführen von Wärmeenergie von den Batteriemodulen auf.

Aus der DE 10 2013 004 837 A1 ist ein Energiebereitstellungsmodul für ein Nutzfahrzeug bekannt. Das Energiebereitstellungsmodul kann in einer fahrzeugrückseitigen Aufnahme eines Antriebsmoduls des Nutzfahrzeugs aufgenommen werden. In einer Ausführungsform weist das Energiebereitstellungsmodul Batteriestacks zum Speichern von elektrischem Strom auf.

Die DE 10 2011 109024 A1 betrifft ein elektrisches Antriebsmodul für ein Nutzfahrzeug mit Elektro- oder Hybridantrieb. Das Antriebsmodul weist zumindest ein Batteriepaket, einen das Batteriepaket aufnehmenden, am Kraftfahrzeug-Aufbau befestigbaren Tragrahmen und eine Kühleinrichtung zum Temperieren der elektrischen Bauteile auf.

Die WO 2017/076980 A1 betrifft ein flurgebundenes und fahrerloses Schwerlast-Transportfahrzeug für ISO-Container, mit einem Fahrantrieb und einem Batteriemodul zur Versorgung des Fahrantriebs mit elektrischer Energie, wobei das Batteriemodul einen Tragrahmen und eine Batterie aufweist.

Die DE 10 2013 001473 A1 betrifft eine Moduleinheit für ein Nutzfahrzeug, wie etwa einen Omnibus oder einen Lastkraftwagen. Die Moduleinheit umfasst einen Tragrahmen, der einen Aufnahmeraum bildet und zur Befestigung an das Nutzfahrzeug dient. Der Aufnahmeraum dient zur Aufnahme von Bauteilen. Die Bauteile umfassen einen Betriebsmitteltank und einen elektrischen Antriebsenergiespeicher.

Der Erfindung liegt die Aufgabe zu Grunde, ein alternatives und/oder verbessertes Energiemodul für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Energiemodul für ein Nutzfahrzeug, vorzugsweise einen Lastkraftwagen oder einen Omnibus. Das Energiemodul weist mehrere Hochvolt-Energiespeicher und ein Kühlsystem zum (z. B. aktiven) Kühlen der Hochvolt-Energiespeicher auf. Das Energiemodul weist eine Tragstruktur auf, die die mehreren Hochvolt-Energiespeicher und das Kühlsystem trägt und dazu ausgebildet, von unten an einem Fahrzeugrahmen (z. B. Leiterrahmen) des Nutzfahrzeugs (z. B. lösbar) angebracht zu werden.

Das Energiemodul bietet den Vorteil der konzentrierten Integration von elektrischen Hochvolt-Energiespeichern mit weiteren wesentlichen Hochvolt- und Niedervolt-Komponenten des Nutzfahrzeugs, wie bspw. das Kühlsystem. Das gesamte Energiemodul kann außerhalb des Nutzfahrzeugs montiert und funktional geprüft werden. Alle Bauteile des Energiemoduls sind mechanisch verbunden, elektrische Netzverbindungen verkabelt und alle temperaturgeregelten Komponenten in dem Kühlsystem zusammengeschlossen.

Das Konzept des Energiemoduls ist beliebig erweiterbar. Je nach Notwendigkeit können bspw. nach Bedarf weitere Energiespeicher ergänzt und/oder einer der Energiespeicher beispielsweise durch die Reichweitenverlängerer ersetzt werden. Ein Aufbau des Energiemoduls unabhängig vom Rest des Nutzfahrzeugs bietet Vorteile aufgrund der nötigen Hochvolt-Qualifikation der Arbeiter und Sicherheitsanforderungen. Es werden ggf. andere Taktzeiten ermöglicht. Eine Inbetriebnahme und Test des Energiemoduls ist separat von der Montagelinie möglich, was vorteilhaft aufgrund der notwendigen Beachtung komplizierter oder spezielle HV-Prüfeinrichtungen ist. Das Energiemodul unterstützt ein Lokalisierungskonzept von Modulen- und / oder Gesamtfahrzeugen an unterschiedlichen Standorten. Im Energiemodul kann das Hochvolt-Knowhow unabhängig eines Montageablaufs konzentriert sein. Es ergibt sich eine kurze Montagezeit an das Basisfahrzeug mit wenigen mechanischen und elektrischen Verbindungen und eine einfache Integration in die Montagelinie, da nur ein Modul von unten an das Fahrzeug montiert wird ("elektrische Hochzeit"). Ferner ergibt sich eine Erweiterungsfähigkeit je nach Fahrzeugeinsatz ohne konstruktiven Eingriff in die übrige Fahrzeugstruktur. Außerdem wird eine schnelle Demontage im Servicefall ermöglicht.

In einem Ausführungsbeispiel lagert die Tragstruktur die mehreren Hochvolt-Energiespeicher und/oder das Kühlsystem elastisch und/oder entkoppelt von einem Grundrahmen der Tragstruktur. Damit können die elektrischen Komponenten während der Fahrt vor schädlichen Vibrationen und im Crashfall vor Beschädigungen geschützt sein.

In einem weiteren Ausführungsbeispiel weist das Kühlsystem einen Kältekreislauf (z. B. mit Phasenwechsel des Kältemittels; z. B. mit Kompressor, Verflüssiger, Drosselorgan und Verdampfer) und/oder einen Flüssigkühlkreislauf auf.

Zweckmäßig kann der Flüssigkühlkreislauf wärmeübertragend mit dem Verdampfer des Kältekreislaufs verbunden sein und/oder Wärmeübertrager zum Kühlen der mehreren Hochvolt-Energiespeicher aufweisen.

In einem weiteren Ausführungsbeispiel ist das Kühlsystem dazu ausgebildet, neben den mehreren Hochvolt-Energiespeichern eine oder mehrere weitere elektrische Komponenten, vorzugsweise Hochvolt-Komponenten (z. B. DC-DC-Wandler und/oder Hochvolt-Stromverteiler usw.) des Energiemoduls zu kühlen.

In einer Ausführungsform weist das Kühlsystem eine Kühlschnittstelle zur Verbindung mit zu kühlenden Komponenten außerhalb des Energiemoduls auf.

In einer weiteren Ausführungsform ist das Kühlsystem, vorzugsweise ein Kältemittelverdichter, Ventile und/oder Aktuatoren des Kühlsystems, mit elektrischer Niedervolt-Energie des Energiemoduls angetrieben.

Es ist möglich, dass das Energiemodul zusätzlich zu den mehreren Hochvolt-Energiespeichern und dem Kühlsystem weitere elektrische Hochvolt- und/oder Niedervoltkomponenten aufweist, die vorzugsweise von der Tragstruktur getragen sind, vorzugsweise elastisch und/oder entkoppelt von einem Grundrahmen der Tragstruktur. Mit jeder weiteren elektrischen Komponente wächst die Funktionsintegration des Energiemoduls.

In einer Ausführungsvariante weist das Energiemodul einen Hochvolt-Stromverteiler auf.

In einer weiteren Ausführungsvariante weist das Energiemodul einen Heizer, vorzugsweise einen Hochvolt-Heizer, z. B. zum Erwärmen der mehreren Hochvolt-Energiespeicher, auf.

In einem Ausführungsbeispiel weist das Energiemodul mindestens einen DC-DC-Wandler (z. B. zwei Hochvolt-zu-12V-Wandler) zum Wandeln zwischen einer Hochvolt-Gleichspannung und einer Niedervolt-Gleichspannung auf.

In einem weiteren Ausführungsbeispiel weist das Energiemodul eine Hochvolt-Schnittstelle zum Versorgen von Hochvolt-Komponenten außerhalb des Energiemoduls auf.

In einer Ausführungsform weist das Energiemodul mindestens einen Niedervolt-Energiespeicher (z. B. zwei 12V-Energiespeicher) auf.

In einer weiteren Ausführungsform weist das Energiemodul ein Bordladegerät zum externen Aufladen der mehreren Hochvolt-Energiespeicher auf.

In einer Ausführungsvariante weist das Energiemodul eine Lenkpumpe, vorzugsweise eine Niedervolt-Lenkpumpe, für eine Servolenkung des Nutzfahrzeugs auf.

In einer weiteren Ausführungsvariante weist das Energiemodul einen Reichweitenverlängerer (z. B. Generator mit Verbrennungsmotor oder Brennstoffzelle) auf.

Zweckmäßig kann der Hochvolt-Stromverteiler, der Heizer, der mindestens eine DC-DC-Wandler, die Hochvolt-Schnittstelle, das Bordladegerät und/oder der Reichweitenverlängerer elektrisch mit den mehreren Hochvolt-Energiespeichern verbunden sein, z. B. über den Hochvolt-Stromverteiler.

In einem Ausführungsbeispiel trägt die Tragstruktur den Hochvolt-Stromverteiler, den Heizer, den mindestens einen DC-DC-Wandler, den mindestens einen Niedervolt-Energiespeicher, das Bordladegerät, die Lenkpumpe und/oder den Reichweitenverlängerer. Vorzugsweise lagert die Tragstruktur den Hochvolt-Stromverteiler, den Heizer, den mindestens einen DC-DC-Wandler, den mindestens einen Niedervolt-Energiespeicher, das Bordladegerät, die Lenkpumpe und/oder den Reichweitenverlängerer elastisch und/oder entkoppelt von einem Grundrahmen der Tragstruktur.

In einem weiteren Ausführungsbeispiel sind das Kühlsystem, der Hochvolt-Stromverteiler, der Heizer, der mindestens eine DC-DC-Wandler, der mindestens eine Niedervolt-Energiespeicher, das Bordladegerät, die Lenkpumpe, die Hochvolt-Schnittstelle und/oder der Reichweitenverlängerer zumindest teilweise (z. B. direkt oder indirekt) auf oder oberhalb der mehreren Hochvolt-Energiespeicher angeordnet. Eine derartige Anordnung kann bspw. aus Bauraum- und Montagegründen vorteilhaft sein.

In einem weiteren Ausführungsbeispiel sind die mehreren Hochvolt-Energiespeicher bodenseitig und/oder nebeneinander in der Tragstruktur angeordnet.

In einer Ausführungsform ist das Energiemodul zum Ermöglichen einer eigenständigen elektrischen Funktionsprüfung vormontiert und elektrisch verkabelt. Alternativ oder zusätzlich sind die mehreren Hochvolt-Energiespeicher, das Kühlsystem, ein Hochvolt-Stromverteiler, ein Heizer, mindestens ein DC-DC-Wandler, mindestens ein Niedervolt-Energiespeicher, ein Bordladegerät, eine Lenkpumpe, eine Hochvolt-Schnittstelle und/oder ein Reichweitenverlängerer eigenständig prüffähig in dem Energiemodul elektrisch verkabelt.

In einer weiteren Ausführungsform ist das Kühlsystem zum Ermöglichen einer eigenständigen Kühlfunktionsprüfung in dem Energiemodul vormontiert und verrohrt.

In einer Ausführungsvariante weist die Tragstruktur einen Grundrahmen und/oder mehrere Trageinheiten, die vorzugsweise elastisch an dem Grundrahmen gelagert sind, auf.

In einer Weiterbildung ist der Grundrahmen kastenförmig und/oder käfigförmig ausgebildet und/oder die mehreren Trageinheiten sind kastenförmig und/oder käfigförmig ausgebildet.

In einer Ausführungsvariante sind die mehreren Trageinheiten in dem Grundrahmen aufgenommen und vorzugsweise nebeneinander angeordnet.

In einer weiteren Ausführungsvariante weist der Grundrahmen an dessen Oberseite eine Mehrzahl von Befestigungsvorrichtungen zur Befestigung des Grundrahmens an dem Fahrzeugrahmen des Nutzfahrzeugs auf.

In einem Ausführungsbeispiel tragen die mehreren Trageinheiten die mehreren Hochvolt-Energiespeicher, das Kühlsystem, den Hochvolt-Stromverteiler, den Heizer, den mindestens einen DC-DC-Wandler, den mindestens einen Niedervolt-Energiespeicher, das Bordladegerät, die Lenkpumpe, die Hochvolt-Schnittstelle und/oder den Reichweitenverlängerer.

In einem Ausführungsbeispiel weisen die mehreren Trageinheiten zwei äußere Trageinheiten, die vorzugsweise an Außenlängsseiten des Energiemoduls angeordnet sind, und/oder eine dazwischen angeordnete innere Trageinheit auf.

Zweckmäßig kann die innere Trageinheit mittig zwischen den äußeren Trageinheiten angeordnet sein.

In einer Weiterbildung trägt die innere Trageinheit mindestens eine elektrische Hochvolt-Komponente, die sich von den mehreren Hochvolt-Energiespeichern unterscheidet. Alternativ oder zusätzlich trägt die innere Trageinheit den Hochvolt-Stromverteiler, den mindestens einen DC-DC-Wandler, das Bordladegerät, den Heizer und/oder die Hochvolt-Schnittstelle. Die in der inneren Trageinheit aufgenommenen elektrischen Komponenten sind besonders geschützt aufgenommen, was insbesondere bei sensiblen Hochvolt-Komponenten vorteilhaft ist.

In einer Weiterbildung tragen die äußeren Trageinheiten mindestens eine elektrische Niedervolt-Komponente, vorzugsweise die Lenkpumpe, das Kühlsystem und/oder den mindestens einen Niedervolt-Energiespeicher.

In einer Ausführungsvariante trägt die innere Trageinheit mindestens eine elektrische Hochvolt-Komponente, die sich von den mehreren Hochvolt-Energiespeichern unterscheidet (z. B. den Hochvolt-Stromverteiler, den mindestens einen DC-DC-Wandler, den Heizer, das Bordladegerät und/oder die Hochvolt-Schnittstelle) und die in einer Vertikalrichtung nach oben zumindest teilweise überstehend über die mittige Trageinheit angeordnet ist, vorzugsweise zur geschützten Anordnung zwischen Hauptlängsträgern des Fahrzeugrahmens.

In einer weiteren Ausführungsvariante weist die Tragstruktur, vorzugsweise ein Grundrahmen der Tragstruktur, an zwei entgegengesetzt zueinander gewandten Außenseiten (z. B. Längsaußenseiten der Tragstruktur, des Grundrahmens und/oder des Energiemoduls) eine Crashstruktur auf, die bei einem Seitenaufprall unter vorbestimmter plastischer Deformation eine Aufprallenergie absorbiert, vorzugsweise ohne die mehreren Trageinheiten zu beeinträchtigen.

In einer Weiterbildung ist die Crashstruktur durch eine, vorzugsweise aus Blech- und/oder Kunststoff gebildete, dreidimensionale Profilstruktur, vorzugsweise eine Trapezprofilstruktur, und/oder durch einen Metallschaum gebildet.

In einem Ausführungsbeispiel weist die Tragstruktur, vorzugsweise ein Grundrahmen der Tragstruktur, an mindestens einer Außenseite, vorzugsweise einer Vorderseite und einer Rückseite der Tragstruktur und/oder des Grundrahmens, ein Unterfahrschutzelement auf, vorzugsweise in Form eines geneigt (z. B. zu einer Horizontalachse und/oder einer Vertikalachse geneigt) angeordneten Unterfahrschutzbleches, das an einer unteren Kante der Außenseite angeordnet ist.

Die Erfindung betrifft auch ein Nutzfahrzeug, vorzugsweise einen Lastkraftwagen oder einen Omnibus, aufweisend das Energiemodul wie hierin offenbart. Das Energiemodul ist von unten an einem Fahrzeugrahmen, vorzugsweise Leiterrahmen, des Nutzfahrzeugs angebracht, vorzugweise zwischen einer Vorderachse und einer Hinterachse des Nutzfahrzeugs.

Es ist auch möglich, die Vorrichtung wie hierin offenbart für andere Kraftfahrzeuge, z. B. geländegängige Fahrzeuge usw., zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer rein schematischen Anordnung eines Energiemoduls an einem Fahrzeugrahmen gemäß der vorliegenden Offenbarung;
- Figur 2: eine perspektivische Ansicht eines Energiemoduls gemäß der vorliegenden Offenbarung; und
- Figur 3: eine perspektivische Ansicht einer Tragvorrichtung eines Energiemoduls gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

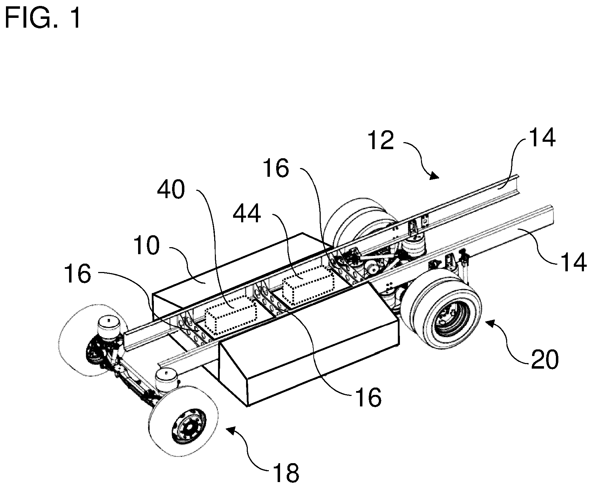

Die Figur 1 zeigt rein schematisch ein Energiemodul 10. Das Energiemodul 10 ist von unten an einen Fahrzeugrahmen 12 eines Nutzfahrzeugs montiert. Das Nutzfahrzeug kann beispielsweise ein Lastkraftwagen oder ein Omnibus sein. Vorzugsweise kann das Nutzfahrzeug ein Elektro-Nutzfahrzeug, das einzig durch elektrische Energie angetrieben ist, oder ein Hybrid-Nutzfahrzeug, das auch durch elektrische Energie antreibbar ist, ausgebildet sein.

Das Energiemodul 10 ist dazu ausgebildet, elektrische Energie zum Antreiben einer außerhalb des Energiemoduls 10 angeordneten elektrischen Antriebseinheit des Nutzfahrzeugs bereitzustellen. Das Energiemodul 10 integriert neben elektrischen Energiespeichern zusätzlich wesentliche Hochvolt- und Niedervolt-Komponenten des Nutzfahrzeugs.

Der Fahrzeugrahmen 12 kann zwei parallel beabstandet Hauptlängsträger 14 und mehrere sich zwischen den Hauptlängsträgern 14 erstreckende Querträger 16 aufweisen. Wie in Figur 1 dargestellt ist, kann das Energiemodul 10 von unten an dem Fahrzeugrahmen 12, vorzugsweise starr, befestigt sein. Durch die Montage unter dem Fahrzeugrahmen 12 ist das Energiemodul 10 unabhängig von einer Konfiguration des Fahrzeugrahmens 12. Im Einzelnen kann das Energiemodul 10 von außen an den Hauptlängsträgern 14 und/oder von unten an den Querträgern 16 befestigt sein, vorzugsweise lösbar, zum Beispiel mittels Schrauben. Das Energiemodul 10 ist zwischen einer Vorderachse 18 und einer Hinterachse 20 des Nutzfahrzeugs angeordnet.

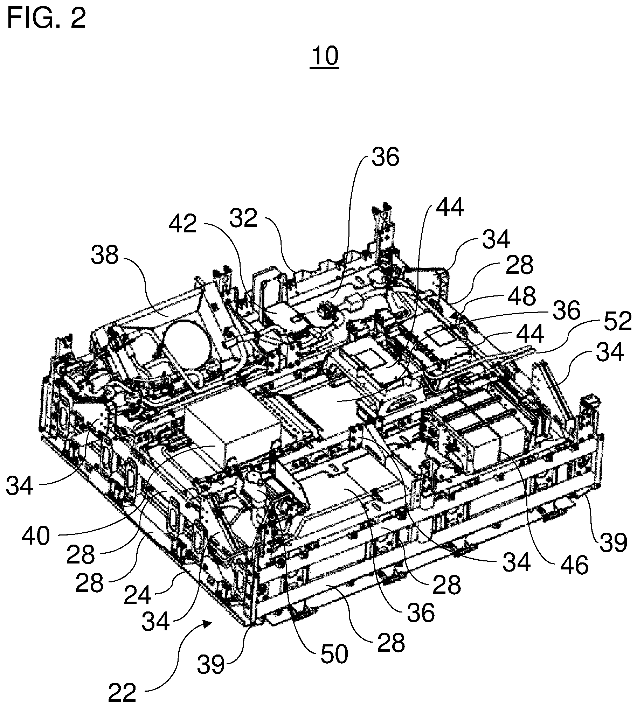

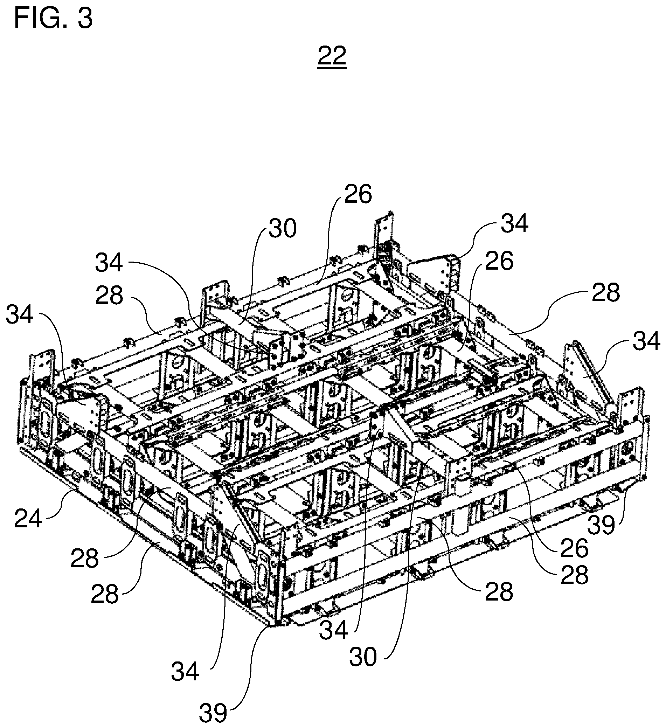

Die Figuren 2 und 3 zeigen eine beispielhafte Ausführungsform des Energiemoduls 10. Die Figur 2 zeigt eine Tragstruktur 22 des Energiemoduls 10 teilweise. Die Figur 3 zeigt die Tragstruktur 22 des Energiemoduls 10 vollständig, wobei die elektrischen Komponenten des Energiemoduls 10 in Figur 3 aus Übersichtsgründen weggelassen sind.

Die Tragstruktur 22 weist einen Grundrahmen 24 und mehrere Trageinheiten 26 auf.

Der Grundrahmen 24 ist als Außenrahmen ausgeführt und vorzugsweise kastenförmig oder käfigförmig und nach oben offen ausgebildet. Die mehreren Trageinheiten 26 sind vorzugsweise ebenfalls kastenförmig oder käfigförmig ausgebildet. Die mehreren Trageinheiten 26 sind in dem Grundrahmen 24 aufgenommen. Vorzugsweise sind die mehreren Trageinheiten 26 elastisch gelagert und somit entkoppelt von dem Grundrahmen 24 in dem Grundrahmen 24 aufgenommen. Beispielsweise sind die Trageinheiten 26 über bodenseitige elastische Lager, zum Beispiel Gummilager, an einem Boden des Grundrahmens 24 abgestützt.

Im gezeigten Ausführungsbeispiel sind drei Trageinheiten 26 nebeneinander und bezüglich einer Längsrichtung des Nutzfahrzeugs ausgerichtet angeordnet. Im an den Fahrzeugrahmen 12 montierten Zustand des Energiemoduls 10 ist die innere bzw. mittige Trageinheit 26 direkt unterhalb des Fahrzeugrahmens 12 angeordnet. Die beiden äußeren Trageinheiten 26 sind jeweils an beiden Längsaußenseiten des Nutzfahrzeugs angeordnet.

In den Trageinheiten 26 sind die elektrischen Komponenten des Energiemoduls 10 aufgenommen. Aufgrund der elastischen Lagerung der Trageinheiten 26 können sich Vibrationen während des Fahrbetriebs weniger schädlich auf die elektrischen Komponenten auswirken. Ferner können die elektrischen Komponenten beispielsweise bei einem Seitenaufprall auf das Energiemodul 10 besser geschützt werden, da sie sich begrenzt in einer Richtung des Seitenaufpralls bewegen können.

Der Grundrahmen 24 bildet eine Schutzstruktur zum Schutz der Trageinheiten 26 und der darin gelagerten elektrischen Komponenten bei Unfällen, insbesondere bei einem Seitenaufprall. Die Schutzstruktur wird durch eine rahmenförmige Anordnung von Außenträgern (Au-ßenquer- und -längsträger) 28 geschaffen, die die Trageinheiten 26 zur Vorderseite, zur Rückseite, zur rechten Längsaußenseite und zur linken Längsaußenseite hin absichern. Ferner sind mehrere Innenquerträger 30 angeordnet, die die Außenträger 28 der Längsaußenseite direkt an dem Fahrzeugrahmen 12 abstützen. Eine Bodenseite des Grundrahmens 24 ist gitterrahmenförmig bspw. aus Flachblechprofilen oder Blechstreifen gebildet.

Ferner kann an den Längsaußenseiten des Grundrahmens 24 eine Crashstruktur 32 angeordnet sein (siehe Figur 2). Aus Übersichtsgründen ist die Crashstruktur 32 nur in Figur 2 für eine der beiden Längsaußenseiten des Grundrahmens 24 dargestellt. Die Crashstruktur 32 ist so ausgebildet, dass sie bei einem Seitenaufprall beispielsweise eines PKW unter vorbestimmter plastischer Deformation eine Aufprallenergie absorbiert. Hierbei werden die Trageinheiten 26 nicht beeinträchtigt. Die Crashstruktur 32 kann beispielsweise, wie dargestellt ist, aus einer Trapezblechstruktur gebildet sein. Es ist allerdings beispielsweise auch möglich, dass die Crashstruktur 32 durch eine andere, vorzugsweise aus Blech und /oder Kunststoff gebildete, dreidimensionale Profilstruktur und/oder durch einen Metallschaum gebildet ist.

Bei einem Seitenaufprall kann somit ein stufiger Abbau der Aufprallenergie erfolgen. Zunächst verformt sich die Crashstruktur 32 auf der entsprechenden Längsaußenseite des Seitenaufpralls plastisch und baut dabei Aufprallenergie ab. Der übrige Teil wird über die Außenträger 28 und die Innenquerträger 30 in den Fahrzeugrahmen 12 geleitet. Das gesamte Energiemodul 10 kann auch über den stufig ansteigenden Energieabbau unter dem Fahrzeugrahmen 12 ausweichen. Eine mögliche geringfügige Deformation des Grundrahmens 24 bleibt ohne Auswirkungen auf die elektrischen Komponenten, da diese beweglich über die Trageinheiten 26 elastisch im Grundrahmen 24 gelagert sind und sich somit (begrenzt) innerhalb des Grundrahmens 24 verschieben können.

An einer Oberseite des Grundrahmens 24 sind mehrere Befestigungsvorrichtungen 34 angeordnet. Die Befestigungsvorrichtungen 34 sind dazu ausgebildet, den Grundrahmen 24 und damit das gesamte Energiemodul 10 direkt und/oder indirekt an dem Fahrzeugrahmen 12 anzubringen, vorzugsweise lösbar, zum Beispiel mittels Schrauben. Beispielsweise können zwei Befestigungsvorrichtungen 34 an den freien Enden der Innenquerträger 30 zur direkten Befestigung an die Längsaußenseiten des Fahrzeugrahmens 12 angeordnet sein. Jeweils zwei weitere Befestigungsvorrichtungen 34 können an einer Vorderseite und an einer Rückseite des Grundrahmens 24 zur indirekten Befestigung beispielsweise über Zwischenbefestigungskonsolen an den Fahrzeugrahmen 12 angeordnet sein.

An einer Unterseite des Grundrahmens 24 kann an einer Vorderseite und einer Hinterseite des Grundrahmens 24 ein Unterfahrschutzelement 39 angeordnet sein. Das Unterfahrschutzelement 39 kann zu einer Horizontalachse und zu einer Vertikalachse geneigt sein und bspw. in Form eines Unterfahrschutzbleches ausgebildet sein. Die Unterfahrschutzelemente 39 sind an einer unteren Kante der Vorderseite und der Rückseite des Energiemoduls 10 angeordnet. Die Unterfahrschutzelemente 39 erstrecken sich entlang einer gesamten Breite des Energiemoduls 10.

Wie in Figur 2 dargestellt ist, weist das Energiemodul 10 mehrere elektrische Komponenten auf. Insbesondere weist das Energiemodul 10 mehrere Hochvolt-Energiespeicher 36 und ein Kühlsystem 38 auf. Das Energiemodul 10 kann neben den Hochvolt-Energiespeichern 36 und dem Kühlsystem 38 weitere elektrische Komponenten aufweisen, um eine Funktionsintegration durch das Energiemodul 10 zu erhöhen. Das Energiemodul 10 kann bspw. ferner einen Hochvolt-Stromverteiler 40, einen Heizer 42, mindestens einen DC-DC-Wandler 44, mindestens einen Niedervolt-Energiespeicher 46, ein Bordladegerät 48, eine Lenkpumpe 50 und/oder eine Hochvolt-Schnittstelle 52 aufweisen, wie in Figur 2 dargestellt ist.

Die Hochvolt-Energiespeicher 36 sind bodenseitig in den Trageinheiten 26 angeordnet und somit elastisch gegenüber dem Grundrahmen 24 gelagert. Die Hochvolt-Energiespeicher 36 sind beispielsweise zum Speichern von elektrischer Hochvolt-Gleichstromenergie ausgebildet. Die Hochvolt-Energiespeicher 36 können, je nach Anforderung, zumindest teilweise parallel und/oder in Reihe geschaltet sein.

Die übrigen elektrischen Komponenten des Energiemoduls 10, wie das Kühlsystem 38, der Hochvolt-Stromverteiler 40, der Heizer 42, der mindestens eine DC-DC-Wandler 44, der mindestens eine Niedervolt-Energiespeicher 46, das Bordladegerät 48, die Lenkpumpe 50 und/oder die Hochvolt-Schnittstelle, sind verteilt in den Trageinheiten 26 aufgenommen. Vorzugsweise sind diese elektrischen Komponenten zumindest teilweise über den Hochvolt-Energiespeichern 36 angeordnet, z. B. direkt oder indirekt auf diesen montiert.

Das Kühlsystem 38 ist zum aktiven Kühlen der Hochvolt-Energiespeicher 36 ausgebildet. Das Kühlsystem 38 kann einen Kältekreislauf mit Phasenwechsel des Kältemittels und einen dadurch gekühlten Flüssigkühlkreislauf aufweisen. Bspw. kann der Kältekreislauf einen Kompressor, einen Verflüssiger, ein Drosselorgan und einen Verdampfer aufweisen. Bspw. kann der Verdampfer zum Kühlen des Flüssigkühlkreislaufs verwendet werden, der mehrere Wärmetauscher für die mehreren Hochvolt-Energiespeicher 36 und ggf. weitere zu kühlende elektrische Komponenten des Energiemoduls 10 aufweisen kann. Das Kühlsystem 38, insbesondere der Kompressor, Aktuatorik und Ventile davon, können elektrisch angetrieben sein, z. B. mit elektrischer Niedervolt-Energie von den Niedervolt-Energiespeichern 46. Der Kältekreislauf, insbesondere der Kompressor, der Verflüssiger, das Drosselorgan und/oder der Verdampfer, können in einer der äußeren Trageinheiten 26 angeordnet sein. Das Kühlsystem 38 kann neben den mehreren Hochvolt-Energiespeichern 36 eine oder mehrere weitere elektrische Komponenten, vorzugsweise Hochvolt-Komponenten (z. B. DC-DC-Wandler 44 und/oder Hochvolt-Stromverteiler 40 usw.), des Energiemoduls 10, die eine Temperaturregulierung benötigen, kühlen. Ferner kann das Kühlsystem 38 eine externe Kühlschnittstelle aufweisen, über die zu kühlenden Komponenten des Nutzfahrzeugs außerhalb des Energiemoduls 10 an das Kühlsystem 38 angebunden werden können.

Der Hochvolt-Stromverteiler 40 stellt eine Vielzahl von Hochvolt-Anschlüssen für eine entsprechende Vielzahl von Hochvolt-Komponenten (z. B. Heizer 42, DC-DC-Wandler 44, Bordladegerät, Reichweitenverlängerer usw.) des Hochvolt-Bordnetzes bereit, um eine elektrisch leitende Verbindung mit den Hochvolt-Energiespeichern 36 zu ermöglichen.

Der Heizer 42 kann vorzugsweise als ein Hochvolt-Heizer ausgebildet sein. Der Heizer 42 kann bei niedrigen Außentemperaturen zum Erwärmen der Hochvolt-Energiespeicher 36 verwendet werden. Der Heizer 42 kann über den Hochvolt-Stromverteiler 40 mit elektrischer Energie von den Hochvolt-Energiespeichern 36 versorgt werden.

Der mindestens eine DC-DC-Wandler 44 ist zum Wandeln zwischen einer Hochvolt-Gleichspannung des Hochvolt-Bordnetzes zu einer Niedervolt-Gleichspannung eines Niedervolt-Bordnetzes ausgebildet. Bspw. können zwei DC-DC-Wandler 44 vorgesehen sein, um die Hochvolt-Gleichspannung jeweils zu einer 12 V Gleichspannung zu wandeln, um ein 24 V-Bordnetz des Nutzfahrzeugs zu versorgen. Insbesondere können so die Niedervolt-Energiespeicher 46 geladen werden.

Die Niedervolt-Energiespeicher 46 sind zum Speichern von elektrischer Niedervolt-Energie zur Versorgung des Niedervolt-Bordnetzes ausgebildet. Bspw. können zwei 12 V-Energiespeicher 46 umfasst sein, um ein 24 V-Bordnetz zu versorgen.

Das Bordladegerät (OBC - engl. on-board charger) 48 dient zum externen Aufladen der mehreren Hochvolt-Energiespeicher 36. Das Bordladegerät 48 kann mit einer Gleichstrom-Ladedose zum Anschließen eines externen Ladekabels elektrisch verbunden sein. Das Bordladegerät 48 kann z. B. unterhalb eines der DC-DC-Wandler 44 angeordnet sein.

Die Lenkpumpe 50 kann einer Servolenkvorrichtung des Nutzfahrzeugs zugeordnet sein. Die Lenkpumpe 50 kann vorzugsweise als eine Niedervolt-Lenkpumpe ausgebildet sein.

Über die elektrische Hochvolt-Schnittstelle 52 des Energiemoduls 10 kann bspw. eine elektrische Antriebseinheit oder dessen Inverter außerhalb des Energiemoduls 10 mit elektrischer Energie versorgt werden. Das Energiemodul 10 kann ferner eine oder mehrere Niedervolt-Schnittstellen zur Versorgung von elektrischen Niedervolt-Komponenten des Nutzfahrzeugs außerhalb des Energiemoduls 10 aufweisen. Z. B. können die Niedervolt-Schnittstellen an einen fahrzeugrahmenseitigen Hauptkabelstrang des Nutzfahrzeugs angeschlossen werden.

Es ist auch möglich, dass das Energiemodul 10 optional einen Reichweitenverlängerer (nicht dargestellt) aufweist. Der Reichweitenverlängerer ist ein zusätzliches Aggregat in einem Elektrofahrzeug, mit dem sich dessen Reichweite erhöhen lässt. Der Reichweitenverlängerer kann eine elektrische Energie zum Laden der Hochvolt-Energiespeicher 36 bereitstellen. Z. B. kann der Reichweitenverlängerer als Kombination von Verbrennungskraftmaschine und Generator oder als bspw. mit Wasserstoff oder Methanol betriebene Brennstoffzelle ausgebildet sein.

Sensible Hochvolt-Komponenten können besonders geschützt durch die beiden äußeren Trageinheiten 26 in der inneren Trageinheit 26 aufgenommen sein. Wie dargestellt ist, kann der Hochvolt-Stromverteiler 40, die DC-DC-Wandler 44, das Bordladegerät 48 und die Hochvolt-Schnittstelle 52 in der inneren Trageinheit 26 aufgenommen sein. Zusätzliche und/oder alternative elektrische Komponenten, insbesondere Hochvolt-Komponenten, können in der inneren Trageinheit 26 angeordnet sein. Das Kühlsystem 38, der Heizer 42, die Niedervolt-Energiespeicher 46 und/oder die Lenkpumpe 50 können bspw. in den äußeren Trageinheiten 26 angeordnet sein.

Die innere Trageinheit 26 ist nicht nur besonders geschützt zwischen den zwei äußeren Trageinheiten 26 angeordnet. Zusätzlich können sich die elektrischen Komponenten, die in der inneren Trageinheit 26 aufgenommen sind, in einer Vertikalrichtung zumindest teilweise überstehend über die innere Trageinheit 26 angeordnet sein, also aus der innigen Trageinheit 26 nach oben herausragen. Diese elektrischen Komponenten erstrecken sich somit in einen Raum hinein, der im am Fahrzeugrahmen 12 montierten Zustand des Energiemoduls 10 besonders geschützt zwischen den Hauptlängsträgern 14 angeordnet ist (siehe Figur 1). Im Ausführungsbeispiel ist dies beispielsweise für den Hochvolt-Stromverteiler 40 und die DC-DC-Wandler 44 realisiert. Zusätzliche und/oder alternative elektrische Komponenten, insbesondere Hochvolt-Komponenten, können in der Vertikalrichtung überstehend in der inneren Trageinheit 26 angeordnet sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der mehreren Hochvolt-Energiespeicher, des Kühlsystems und/oder der Tragstruktur des unabhängigen Anspruchs 1 offenbart.

### Bezugszeichenliste

- 10: Energiemodul
- 12: Fahrzeugrahmen
- 14: Hauptlängsträger
- 16: Querträger
- 18: Vorderachse
- 20: Hinterachse
- 22: Tragstruktur
- 24: Grundrahmen
- 26: Trageinheiten
- 28: Außenträger
- 30: Innenquerträger
- 32: Crashstruktur
- 34: Befestigungsvorrichtung
- 36: Hochvolt-Energiespeicher
- 38: Kühlsystem
- 39: Unterfahrschutzelement
- 40: Hochvolt-Stromverteiler
- 42: Heizer
- 44: DC-DC-Wandler
- 46: Niedervolt-Energiespeicher
- 48: Bordladegerät
- 50: Lenkpumpe
- 52: Hochvolt-Schnittstelle

## Patentansprüche

1. Energiemodul (10) für ein Nutzfahrzeug, vorzugsweise einen Lastkraftwagen oder einen Omnibus, aufweisend:
mehrere Hochvolt-Energiespeicher (36);
ein Kühlsystem (38) zum Kühlen der Hochvolt-Energiespeicher (36); und
eine Tragstruktur (22), die die mehreren Hochvolt-Energiespeicher (36) und das Kühlsystem (38) trägt und dazu ausgebildet ist, von unten an einem Fahrzeugrahmen (12) des Nutzfahrzeugs angebracht zu werden;
wobei die Tragstruktur (22), vorzugsweise ein Grundrahmen (24) der Tragstruktur (22), an zwei entgegengesetzt zueinander gewandten Außenseiten eine Crashstruktur (32) aufweist, die bei einem Seitenaufprall unter vorbestimmter plastischer Deformation eine Aufprallenergie absorbiert, vorzugsweise ohne die mehreren Trageinheiten (26) zu beeinträchtigen.

2. Energiemodul (10) nach Anspruch 1, wobei:
die Tragstruktur (22) die mehreren Hochvolt-Energiespeicher (36) und/oder das Kühlsystem (38) elastisch und/oder entkoppelt von einem Grundrahmen (24) der Tragstruktur (22) lagert.

3. Energiemodul (10) nach Anspruch 1 oder Anspruch 2, wobei:
das Kühlsystem (38) einen Kältekreislauf und/oder einen Flüssigkühlkreislauf aufweist; und/oder
das Kühlsystem (38) dazu ausgebildet ist, neben den mehreren Hochvolt-Energiespeichern (36) eine oder mehrere weitere elektrische Komponenten, vorzugsweise Hochvolt-Komponenten, des Energiemoduls (10), zu kühlen; und/oder
das Kühlsystem (38) eine Kühlschnittstelle zur Verbindung mit zu kühlenden Komponenten außerhalb des Energiemoduls (10) aufweist; und/oder
das Kühlsystem (38) mit elektrischer Niedervolt-Energie des Energiemoduls (10) angetrieben ist.

4. Energiemodul (10) nach einem der vorherigen Ansprüche, ferner aufweisend:
einen Hochvolt-Stromverteiler (40); und/oder
einen Heizer (42), vorzugsweise einen Hochvolt-Heizer; und/oder
mindestens einen DC-DC-Wandler (44) zum Wandeln zwischen einer Hochvolt-Gleichspannung und einer Niedervolt-Gleichspannung; und/oder
eine Hochvolt-Schnittstelle (52) zum Versorgen von Hochvolt-Komponenten außerhalb des Energiemoduls (10).

5. Energiemodul (10) nach einem der vorherigen Ansprüche, ferner aufweisend:
mindestens einen Niedervolt-Energiespeicher (46); und/oder
ein Bordladegerät (48) zum externen Aufladen der mehreren Hochvolt-Energiespeicher (36); und/oder
eine Lenkpumpe (50), vorzugsweise eine Niedervolt-Lenkpumpe, für eine Servolenkung des Nutzfahrzeugs; und/oder
einen Reichweitenverlängerer.

6. Energiemodul (10) nach Anspruch 4 oder Anspruch 5, wobei:
die Tragstruktur (22) den Hochvolt-Stromverteiler (40), den Heizer (42), den mindestens einen DC-DC-Wandler (44), den mindestens einen Niedervolt-Energiespeicher (46), das Bordladegerät (48), die Lenkpumpe (50) und/oder den Reichweitenverlängerer trägt, und vorzugsweise elastisch und/oder entkoppelt von einem Grundrahmen (24) der Tragstruktur (22) lagert.

7. Energiemodul (10) nach einem der Ansprüche 4 bis 6, wobei:
das Kühlsystem (38), der Hochvolt-Stromverteiler (40), der Heizer (42), der mindestens eine DC-DC-Wandler (44), der mindestens eine Niedervolt-Energiespeicher (46), das Bordladegerät (48), die Lenkpumpe (50), die Hochvolt-Schnittstelle (52) und/oder der Reichweitenverlängerer zumindest teilweise auf oder oberhalb der mehreren Hochvolt-Energiespeicher (36) angeordnet sind; und/oder
die mehreren Hochvolt-Energiespeicher (36) bodenseitig und/oder nebeneinander in der Tragstruktur (22) angeordnet sind.

8. Energiemodul (10) nach einem der vorherigen Ansprüche, wobei:
das Energiemodul (10) zum Ermöglichen einer eigenständigen elektrischen Funktionsprüfung vormontiert und elektrisch verkabelt ist; und/oder
die mehreren Hochvolt-Energiespeicher (36), das Kühlsystem (38), ein Hochvolt-Stromverteiler (40), ein Heizer (42), mindestens ein DC-DC-Wandler (44), mindestens ein Niedervolt-Energiespeicher (46), ein Bordladegerät (48), eine Lenkpumpe (50), eine Hochvolt-Schnittstelle (52) und/oder ein Reichweitenverlängerer eigenständig prüffähig in dem Energiemodul (10) elektrisch verkabelt sind; und/oder
das Kühlsystem (38) zum Ermöglichen einer eigenständigen Kühlfunktionsprüfung in dem Energiemodul (10) vormontiert und verrohrt ist.

9. Energiemodul (10) nach einem der vorherigen Ansprüche, wobei:
die Tragstruktur (22) einen Grundrahmen (24) und mehrere Trageinheiten (26), die elastisch an dem Grundrahmen (24) gelagert sind, aufweist,
wobei vorzugsweise:
der Grundrahmen (24) kastenförmig und/oder käfigförmig ausgebildet ist; und/oder
die mehreren Trageinheiten (26) kastenförmig und/oder käfigförmig ausgebildet sind; und/oder
die mehreren Trageinheiten (26) in dem Grundrahmen (24) aufgenommen sind, vorzugsweise nebeneinander angeordnet; und/oder
der Grundrahmen (24) an dessen Oberseite eine Mehrzahl von Befestigungsvorrichtungen (34) zur Befestigung des Grundrahmens (24) an dem Fahrzeugrahmen (12) des Nutzfahrzeugs aufweist.

10. Energiemodul (10) nach Anspruch 9, wobei:
die mehreren Trageinheiten (26) die mehreren Hochvolt-Energiespeicher (36), das Kühlsystem (38), den Hochvolt-Stromverteiler (40), den Heizer (42), den mindestens einen DC-DC-Wandler (44), den mindestens einen Niedervolt-Energiespeicher (46), das Bordladegerät (48), die Lenkpumpe (50), die Hochvolt-Schnittstelle (52) und/oder den Reichweitenverlängerer tragen.

11. Energiemodul (10) nach Anspruch 9 oder Anspruch 10, wobei die mehreren Trageinheiten (26) zwei äußere Trageinheiten (26), die an Außenlängsseiten des Energiemoduls (10) angeordnet sind, und eine dazwischen angeordnete innere Trageinheit (26) aufweisen, wobei:
die innere Trageinheit (26) mindestens eine elektrische Hochvolt-Komponente, die sich von den mehreren Hochvolt-Energiespeichern (36) unterscheidet, trägt; und/oder
die innere Trageinheit (26) den Hochvolt-Stromverteiler (40), den mindestens einen DC-DC-Wandler (44), das Bordladegerät (48), den Heizer (42) und/oder die Hochvolt-Schnittstelle (52) trägt; und/oder
die äußeren Trageinheiten (26) mindestens eine elektrische Niedervolt-Komponente, vorzugsweise die Lenkpumpe (50), das Kühlsystem (38) und/oder den mindestens einen Niedervolt-Energiespeicher (46), trägt; und/oder
die innere Trageinheit (26) mindestens eine elektrische Hochvolt-Komponente, die sich von den mehreren Hochvolt-Energiespeichern (36) unterscheidet und die in einer Vertikalrichtung nach oben zumindest teilweise überstehend über die mittige Trageinheit (26) angeordnet ist, trägt, vorzugsweise zur geschützten Anordnung zwischen Hauptlängsträgern (14) des Fahrzeugrahmens (12).

12. Energiemodul (10) nach einem der vorherigen Ansprüche, wobei:
die Crashstruktur (32) durch eine, vorzugsweise aus Blech und/oder Kunststoff gebildete, dreidimensionale Profilstruktur, vorzugsweise eine Trapezprofilstruktur, und/oder durch einen Metallschaum gebildet ist.

13. Energiemodul (10) nach einem der vorherigen Ansprüche, wobei:
die Tragstruktur (22), vorzugsweise ein Grundrahmen (24) der Tragstruktur (22), an mindestens einer Außenseite, vorzugsweise einer Vorderseite und einer Rückseite der Tragstruktur (22), ein Unterfahrschutzelement (39) aufweist, vorzugsweise in Form eines geneigt angeordneten Unterfahrschutzbleches, das an einer unteren Kante der Außenseite angeordnet ist.

14. Nutzfahrzeug, vorzugsweise Lastkraftwagen oder Omnibus, aufweisend ein Energiemodul (10) nach einem der vorherigen Ansprüche, wobei das Energiemodul (10) von unten an einem Fahrzeugrahmen (12), vorzugsweise Leiterrahmen, des Nutzfahrzeugs angebracht ist, vorzugweise zwischen einer Vorderachse (16) und einer Hinterachse (18) des Nutzfahrzeugs.

## Claims

1. An energy module (10) for a utility vehicle, preferably a lorry or a bus, comprising:
a plurality of high-voltage energy storages (36);
a cooling system (38) for cooling the high-voltage energy storages (36); and
a support structure (22) that supports the plurality of high-voltage energy storages (36) and the cooling system (38) and is configured to be attached from below to a vehicle frame (12) of the utility vehicle;
wherein the support structure (22), preferably a base frame (24) of the support structure (22), comprises, on two outer sides facing away from each other, a crash structure (32) that absorbs impact energy in an event of a side impact under predetermined plastic deformation, preferably without affecting the plurality of support units (26).

2. The energy module (10) according to claim 1, wherein:
the support structure (22) supports the plurality of high-voltage energy storages (36) and/or the cooling system (38) in an elastic and/or decoupled manner from a base frame (24) of the support structure (22).

3. The energy module (10) according to claim 1 or claim 2, wherein:
the cooling system (38) comprises a refrigeration circuit and/or a liquid cooling circuit; and/or
the cooling system (38) is configured to cool, in addition to the plurality of high-voltage energy storages (36), one or more other electrical components, preferably high-voltage components, of the energy module (10); and/or
the cooling system (38) comprises a cooling interface for connection to components outside the energy module (10) that are to be cooled; and/or
the cooling system (38) is powered by low-voltage electric energy from the energy module (10).

4. The energy module (10) according to any one of the preceding claims, further comprising:
a high-voltage power distributor (40); and/or
a heater (42), preferably a high voltage heater; and/or
at least one DC-DC converter (44) for converting between a high-voltage DC voltage and a low-voltage DC voltage; and/or
a high-voltage interface (52) for supplying high-voltage components outside the energy module (10).

5. The energy module (10) according to any one of the preceding claims, further comprising:
at least one low-voltage energy storage (46); and/or
an on-board charger (48) for externally charging the plurality of high-voltage energy storages (36); and/or
a steering pump (50), preferably a low-voltage steering pump, for power steering of the utility vehicle; and/or
a range extender.

6. The energy module (10) according to claim 4 or claim 5, wherein:
the support structure (22) supports the high-voltage power distributor (40), the heater (42), the at least one DC-DC converter (44), the at least one low-voltage energy storage (46), the on-board charger (48), the steering pump (50) and/or the range extender, and is preferably mounted elastically and/or decoupled from a base frame (24) of the support structure (22).

7. The energy module (10) according to any one of claims 4 to 6, wherein:
the cooling system (38), the high-voltage power distributor (40), the heater (42), the at least one DC-DC converter (44), the at least one low-voltage energy storage (46), the on-board charger (48), the steering pump (50), the high-voltage interface (52) and/or the range extender are at least partially arranged on or above the plurality of high-voltage energy storages (36); and/or
the plurality of high-voltage energy storages (36) are arranged on a bottom-side and/or next to each other in the support structure (22).

8. The energy module (10) according to any one of the preceding claims, wherein:
the energy module (10) is pre-assembled and electrically wired to enable independent electrical functional testing; and/or
the plurality of high-voltage energy storages (36), the cooling system (38), a high-voltage power distributor (40), a heater (42), at least one DC-DC converter (44), at least one low-voltage energy storage (46), an on-board charger (48), a steering pump (50), a high-voltage interface (52) and/or a range extender are electrically wired in the energy module (10) in such a way that they can be tested independently; and/or
the cooling system (38) is pre-assembled and piped in the energy module (10) to enable independent testing of a cooling function.

9. The energy module (10) according to any one of the preceding claims, wherein:
the support structure (22) comprises a base frame (24) and a plurality of support units (26) which are elastically supported on the base frame (24),
wherein preferably:
the base frame (24) is configured in a box-shaped and/or cage-shaped manner; and/or
the plurality of support units (26) are configured in a box-shaped and/or cage-shaped manner; and/or
the plurality of support units (26) are received in the base frame (24), preferably arranged next to one another; and/or
the base frame (24) comprises a plurality of fastening devices (34) on its upper side for fastening the base frame (24) to the vehicle frame (12) of the utility vehicle.

10. The energy module (10) according to claim 9, wherein:
the plurality of support units (26) support the plurality of high-voltage energy storages (36), the cooling system (38), the high-voltage power distributor (40), the heater (42), the at least one DC-DC converter (44), the at least one low-voltage energy storage (46), the on-board charger (48), the steering pump (50), the high-voltage interface (52) and/or the range extender.

11. The energy module (10) according to claim 9 or claim 10, wherein the plurality of support units (26) comprise two outer support units (26) arranged on outer longitudinal sides of the energy module (10) and an inner support unit (26) arranged therebetween, wherein:
the inner support unit (26) supports at least one high-voltage electrical component that is different from the plurality of high-voltage energy storages (36); and/or
the inner support unit (26) supports the high-voltage power distributor (40), the at least one DC-DC converter (44), the on-board charger (48), the heater (42) and/or the high-voltage interface (52); and/or
the outer support units (26) support at least one low-voltage electrical component, preferably the steering pump (50), the cooling system (38) and/or the at least one low-voltage energy storage (46); and/or
the inner support unit (26) supports at least one high-voltage electrical component, which differs from the plurality of high-voltage energy storages (36) and which is arranged in a vertical direction upwards at least partially protruding above the central support unit (26), preferably for protected arrangement between main longitudinal beams (14) of the vehicle frame (12).

12. The energy module (10) according to any one of the preceding claims, wherein:
the crash structure (32) is formed, preferably formed from sheet metal and/or plastic, by a three-dimensional profile structure, preferably a trapezoidal profile structure, and/or by a metal foam.

13. The energy module (10) according to any one of the preceding claims, wherein:
the support structure (22), preferably a base frame (24) of the support structure (22), comprises an underride protection element (39) on at least one outer side, preferably a front side and a rear side of the supporting structure (22), preferably in the form of an inclined underride protection plate arranged on a lower edge of the outer side.

14. A utility vehicle, preferably a lorry or bus, comprising an energy module (10) according to any one of the preceding claims, wherein the energy module (10) is attached from below to a vehicle frame (12), preferably a ladder frame, of the utility vehicle, preferably between a front axle (16) and a rear axle (18) of the utility vehicle.

## Revendications

1. Module d'énergie (10) destiné à un véhicule utilitaire, de préférence un camion ou un bus, comportant :
plusieurs accumulateurs d'énergie à haute tension (36) ;
un système de refroidissement (38) destiné à refroidir les accumulateurs d'énergie à haute tension (36) ; et
une structure de support (22), qui supporte les plusieurs accumulateurs d'énergie à haute tension (36) et le système de refroidissement (38) et qui est conçue pour être fixée à un châssis de véhicule (12) du véhicule utilitaire depuis le bas ;
la structure de support (22), de préférence un châssis de base (24) de la structure de support (22), comportant sur deux côtés extérieurs opposés l'un à l'autre une structure de collision (32), qui, en cas de choc latéral, absorbe, moyennant une déformation plastique prédéfinie, une énergie de choc, de préférence sans altérer les plusieurs unités de support (26).

2. Module d'énergie (10) selon la revendication 1,
la structure de support (22) logeant les plusieurs accumulateurs d'énergie à haute tension (36) et/ou le système de refroidissement (38) de manière élastique et/ou découplée d'un châssis de base (24) de la structure de support (22).

3. Module d'énergie (10) selon la revendication 1 ou la revendication 2,
le système de refroidissement (38) comportant un circuit de réfrigération et/ou un circuit de refroidissement liquide ; et/ou
le système de refroidissement (38) étant conçu pour refroidir un ou plusieurs autres composants électriques, de préférence des composants à haute tension, du module d'énergie (10) en plus des plusieurs accumulateurs d'énergie à haute tension (36) ; et/ou
le système de refroidissement (38) comportant une interface de refroidissement destinée à être reliée à des composants à refroidir à l'extérieur du module d'énergie (10) ; et/ou
le système de refroidissement (38) étant entraîné avec l'énergie électrique à basse tension du module d'énergie (10).

4. Module d'énergie (10) selon l'une des revendications précédentes, comportant en outre :
un distributeur de courant à haute tension (40) ; et/ou
un réchauffeur (42), de préférence un réchauffeur à haute tension ; et/ou
au moins un convertisseur continu-continu (44) destiné à effectuer une conversion entre un courant continu à haute tension et un courant continu à basse tension ; et/ou
une interface à haute tension (52) destinée à alimenter des composants à haute tension à l'extérieur du module d'énergie (10).

5. Module d'énergie (10) selon l'une des revendications précédentes, comportant en outre :
au moins un accumulateur d'énergie à basse tension (46) ; et/ou
un chargeur embarqué (48) destiné à charger manière externe les plusieurs accumulateurs d'énergie à haute tension (36) ; et/ou
une pompe de direction (50), de préférence une pompe de direction à basse tension, destinée à une direction assistée du véhicule utilitaire ; et/ou
un prolongateur d'autonomie.

6. Module d'énergie (10) selon la revendication 4 ou la revendication 5,
la structure de support (22) supportant le distributeur de courant à haute tension (40), le réchauffeur (42), l'au moins un convertisseur continu-continu (44), l'au moins un accumulateur d'énergie à basse tension (46), le chargeur embarqué (48), la pompe de direction (50) et/ou le prolongateur d'autonomie, et de préférence les logeant de manière élastique et/ou découplée d'un châssis de base (24) de la structure de support (22).

7. Module d'énergie (10) selon l'une des revendications 4 à 6,
le système de refroidissement (38), le distributeur de courant à haute tension (40), le réchauffeur (42), l'au moins un convertisseur continu-continu (44), l'au moins un accumulateur d'énergie à basse tension (46), le chargeur embarqué (48), la pompe de direction (50), l'interface à haute tension (52) et/ou le prolongateur d'autonome étant disposés au moins partiellement sur ou au-dessus des plusieurs accumulateurs d'énergie à haute tension (36) ; et/ou
les plusieurs accumulateurs d'énergie à haute tension (36) étant disposés côté sol et/ou les uns à côté des autres dans la structure de support (22).

8. Module d'énergie (10) selon l'une des revendications précédentes,
le module d'énergie (10) étant pré-monté et câblé électriquement pour permettre un test de fonctionnement électrique indépendant ; et/ou
les plusieurs accumulateurs d'énergie à haute tension (36), le système de refroidissement (38), un distributeur de courant à haute tension (40), un réchauffeur (42), au moins un convertisseur continu-continu (44), au moins un accumulateur d'énergie à basse tension (46), un chargeur embarqué (48), une pompe de direction (50), une interface à haute tension (52) et/ou un prolongateur d'autonomie étant câblés électriquement dans le module d'énergie (10) de sorte qu'ils puissent être testés indépendamment ; et/ou
le système de refroidissement (38) étant pré-monté et pourvu de canalisations dans le module d'énergie (10) pour permettre un test indépendant de la fonction de refroidissement.

9. Module d'énergie (10) selon l'une des revendications précédentes,
la structure de support (22) comportant un châssis de base (24) et plusieurs unités de support (26), qui sont montées élastiquement sur le châssis de base (24),
de préférence :
le châssis de base (24) étant en forme de boîte et/ou en forme de cage ; et/ou
les plusieurs unités de support (26) étant en forme de boîte et/ou en forme de cage ; et/ou
les plusieurs unités de support (26) étant reçues dans le châssis de base (24), de préférence disposées les unes à côté des autres ; et/ou
le châssis de base (24) comportant sur son côté supérieur une pluralité de dispositifs de fixation (34) destinés à fixer le châssis de base (24) au châssis de véhicule (12) du véhicule utilitaire.

10. Module d'énergie (10) selon la revendication 9,
les plusieurs unités de support (26) supportant les plusieurs accumulateurs d'énergie à haute tension (36), le système de refroidissement (38), le distributeur de courant à haute tension (40), le réchauffeur (42), l'au moins un convertisseur continu-continu (44), l'au moins un accumulateur d'énergie à basse tension (46), le chargeur embarqué (48), la pompe de direction (50), l'interface à haute tension (52) et/ou le prolongateur d'autonomie.

11. Module d'énergie (10) selon la revendication 9 ou la revendication 10, les plusieurs unités de support (26) comportant deux unités de support extérieures (26), qui sont disposées sur des côtés longitudinaux extérieurs du module d'énergie (10), et une unité de support intérieure (26) agencée entre elles,
l'unité de support intérieure (26) supportant au moins un composant électrique à haute tension qui diffère des plusieurs accumulateurs d'énergie à haute tension (36) ; et/ou
l'unité de support intérieure (26) supportant le distributeur de courant à haute tension (40), l'au moins un convertisseur continu-continu (44), le chargeur embarqué (48), le réchauffeur (42) et/ou l'interface à haute tension (52) ; et/ou
les unités de support extérieures (26) supportant au moins un composant électrique à basse tension, de préférence la pompe de direction (50), le système de refroidissement (38) et/ou l'au moins un accumulateur d'énergie à basse tension (46) ; et/ou
l'unité de support intérieure (26) supportant au moins un composant électrique à haute tension qui diffère des plusieurs accumulateurs d'énergie à haute tension (36) et qui est disposé dans une direction verticale au moins partiellement en surplomb au-dessus de l'unité de support médiane (26), de préférence pour réaliser une disposition protégée entre les longerons principaux (14) du châssis de véhicule (12).

12. Module d'énergie (10) selon l'une des revendications précédentes,
la structure de collision (32) étant formée par une structure profilée tridimensionnelle de préférence en tôle et/ou en plastique, de préférence une structure profilée trapézoïdale, et/ou par une mousse métallique.

13. Module d'énergie (10) selon l'une des revendications précédentes,
la structure de support (22), de préférence un châssis de base (24) de la structure de support (22), comportant un élément de protection anti-encastrement (39) sur au moins un côté extérieur, de préférence un côté avant et un côté arrière de la structure de support (22), de préférence sous la forme d'une tôle de protection anti-encastrement inclinée, qui est disposé sur un bord inférieur du côté extérieur.

14. Véhicule utilitaire, de préférence camion ou bus, comportant un module d'énergie (10) selon l'une des revendications précédentes, le module d'énergie (10) étant fixé depuis le bas à un châssis de véhicule (12), de préférence un châssis directeur, du véhicule utilitaire, de préférence entre un essieu avant (16) et un essieu arrière (18) du véhicule utilitaire.
